# EUROPÄISCHE PATENTSCHRIFT

(11) **EP 3 643 541 B1**
(45) Veröffentlichungstag und Bekanntmachung des Hinweises auf die Patenterteilung: **21.07.2021**
(21) Anmeldenummer: 19202247.3
(22) Anmeldetag: 09.10.2019
(51) Int. Cl.: B60C 23/04

(54) **SYSTEM ZUR ÜBERWACHUNG DES REIFENDRUCKS**
TYRE PRESSURE MONITORING SYSTEM
SYSTÈME DE SURVEILLANCE DE LA PRESSION DES PNEUS

(30) Priorität: 25.10.2018 DE 102018126620
(43) Veröffentlichungstag der Anmeldung: 29.04.2020
(73) Patentinhaber: Huf Baolong Electronics Bretten GmbH, 75015 Bretten (DE)
(72) Erfinder: Wagner, Markus, 71638 Ludwigsburg (DE)
(74) Vertreter: Twelmeier Mommer & Partner

(56) Entgegenhaltungen:
- EP-A1- 2 703 192
- DE-A1-102013 212 799

## Beschreibung

Die Erfindung betrifft ein System zur Überwachung des Reifendrucks von Rädern eines Fahrzeugs. Ein System mit den im Oberbegriff des Anspruchs 1 angegebenen Merkmalen ist beispielsweise aus der EP 0 806 306 B1, der EP 2 703 1092 A1 sowie der DE 10 2012 110 689 A1 bekannt.

Moderne Reifendrucküberwachungssysteme arbeiten mit Reifendrucküberwachungseinheiten, die an den Rädern eines Fahrzeuges montiert werden und einen Drucksensor zum Messen des Reifendrucks sowie einen oder mehrere Beschleunigungssensoren enthalten. Im Betrieb senden die Reifendrucküberwachungseinheiten Datentelegramme aus, die Daten über den Zustand des Reifens sowie eine für die aussendende Reifendrucküberwachungseinheit charakteristische Kennung enthalten. Diese charakteristische Kennung wird von einer Auswerteeinheit des Fahrzeugs einer der Radpositionen des Fahrzeugs zugeordnet. Für diese Zuordnung werden Daten des Beschleunigungssensors der jeweiligen Reifendrucküberwachungseinheit sowie Daten der Drehsensoren genutzt, die den einzelnen Rädern des Fahrzeugs zugeordnet sind. Der entsprechende Datenaustausch erfolgt über einen Bus, an den Drehsensoren und Empfänger der von den Reifendrucküberwachungseinheiten gesendeten Signale angeschlossen sind, wie dies in der EP 2 703 192 A1 beschrieben ist.

Aus der DE 10 2013 212 799 A1 ist es bekannt, die Steuereinheit eines Reifendrucküberwachungssystems über einen Gateway an einen zweiten Bus anzuschließen, damit bei einem Aufpumpen eines Reifens die Steuereinheit einen Außenspiegel-Fahrrichtungsanzeiger aktivieren kann, so dass visuell signalisiert kann, wann ein optimaler Fülldruck des Reifens erreicht ist.

Drehsensoren werden manchmal auch als ABS Sensoren bezeichnet. Derartige Sensoren erzeugen bei einer Drehung des ihnen jeweils zugeordneten Rades um einen vorgegebenen Drehwinkel ein Signal, das einen dem Drehsensor zugeordneten Zählerstand inkrementiert. Solche Drehsensoren weisen in der Regel einen mit dem Rad rotierenden Zahnkranz auf. Jedes Mal wenn eine Flanke eines Zahns dieses Zahnkranzes eine vorgegebene Position passiert, kann dies beispielsweise mit einer Lichtschranke erfasst werden und so ein Signal erzeugt werden. Bei einem Zahnrad mit beispielsweise 48 Zähnen werden also im Lauf einer vollen Radumdrehung 96 Signale erzeugt. Durch Vergleich von zwei Zählerständen zu bekannten Zeiten lässt sich somit ermitteln, wie weit sich das betreffende Rad gedreht hat.

Informationen über die Raddrehung, insbesondere die Drehzahl eines Rades, können zusätzlich auch mit dem Beschleunigungssensor einer Reifendrucküberwachungseinheit gewonnen werden. Auf der Grundlage von Daten der Drehsensoren und der Beschleunigungssensoren der Reifendrucküberwachungseinheiten ist somit eine Zuordnung jeweils einer Reifendrucküberwachungseinheit zu jeweils einem Drehsensor und damit auch zu einer Radposition des Fahrzeugs möglich. Einzelheiten eines solchen Zuordnungsverfahrens sind beispielsweise in der EP 0 806 306 B1 sowie der DE 10 2012 110 689 A1 beschrieben, auf die diesbezüglich verwiesen wird.

Drehsensoren sind in Fahrzeugen in der Regel als Teil von ABS Systemen vorhanden. Die Zählerstände für die einzelnen Drehsensoren werden typischerweise in Zeitabständen von 10 Millisekunden erfasst und über ein Bussystem verschiedenen Steuersystemen zur Verfügung gestellt, beispielsweise einem Bremssteuersystem und einem Fahrzeugstabilisierungssystem.

Die dabei von dem Bussystem übertragenen Daten der Drehsensoren haben somit ein relativ großes Volumen, insbesondere bei Nutzfahrzeugen mit einer größeren Anzahl von Rädern. Sowohl die über ein Bussystem eines Fahrzeugs mit vernünftigem Aufwand übertragbare Datenmenge als auch die Anzahl der an das Bussystem anschließbaren Steuereinheiten und Subsysteme ist begrenzt. Fahrzeughersteller gehen deshalb zunehmend dazu über, in einem einzigen Fahrzeug mehrere Bussysteme vorzusehen, an die jeweils nur ein Teil der verschiedenen Steuereinheiten und Subsysteme eines Fahrzeugs angeschlossen ist.

Damit die Auswerteeinheit eines Reifendrucküberwachungssystems auf die Daten der verschiedenen Drehsensoren zugreifen kann, sollte diese an dasselbe Bussystem wie die Drehsensoren angeschlossen sein. Die Freiheiten bei der Konzeption von der Architektur verschiedener Bussysteme eines Fahrzeugs werden dadurch nachteilig beschränkt.

Aufgabe der vorliegenden Erfindung ist es deshalb, einen Weg aufzuzeigen, wie bei einem Fahrzeug mit mehreren Bussystemen der Zugriff einer Auswerteeinheit eines Reifendrucküberwachungssystems auf Daten von Drehsensoren mit möglichst geringem Aufwand ermöglicht werden kann.

Diese Aufgabe wird durch ein System mit den im Anspruch 1 angegebenen Merkmalen gelöst. Vorteilhafte Weiterbildungen der Erfindung sind Gegenstand von Unteransprüchen.

Bei einem erfindungsgemäßen System zur Überwachung des Reifendrucks von Rädern eines Fahrzeugs sind Drehsensoren, die jeweils einem der Räder des Fahrzeugs zugeordnet und dafür eingerichtet sind, bei einer Drehung des ihnen jeweils zugeordneten Rades um einen vorgegebenen Drehwinkel ein Signal zu erzeugen, das einen dem Drehsensor zugeordneten Zählerstand inkrementiert, an ein erstes Bussystem angeschlossen und eine Auswerteeinheit, die auf der Grundlage von Daten der Drehsensoren und von Daten, die in den von den Datentelegrammen der einzelnen Reifendrucküberwachungseinheiten ausgesandten Datentelegrammen enthalten sind, Reifendrucküberwachungseinheiten bzw. deren charakteristische Kennung einer Radposition zuordnet, an ein zweites Bussystem angeschlossen. Die beiden Bussysteme sind über einen Gateway miteinander verbunden. Da die von den Drehsensoren gelieferten Daten ein erhebliches Volumen haben, ist es sehr aufwendig, diese Daten vollständig über den Gateway von dem ersten Bussystem auf das zweite Bussystem zu übertragen.

Erfindungsgemäß ist deshalb vorgesehen, dass der Gateway auf Anforderung einen Zählerstand der einzelnen Drehsensoren aus dem ersten Bussystem in das zweite Bussystem überträgt. Die Auswerteeinheit benötigt nämlich Daten der Drehsensoren nur für die Zeitpunkte, für die auch Daten von Beschleunigungssensoren der Reifendrucküberwachungseinheiten vorliegen, also insbesondere für Zeitpunkte, für die von Datentelegrammen Informationen geliefert werden. Die Zeitpunkte können im einfachsten Fall die Zeitpunkte sein, zu denen Datentelegramme empfangen wurden.

Bei einem erfindungsgemäßen Reifendrucküberwachungssystem wird somit bei Empfang eines Datentelegramms der Gateway aufgefordert, Zählerstände der einzelnen Drehsensoren aus dem ersten Bussystem auf das zweite Bussystem zu übertragen, wo sie dann von der Auswerteeinheit gelesen werden können. Vorteilhaft kann so das Volumen der aus dem ersten Datenbus in das zweite Datenbussystem übertragenen Daten soweit reduziert werden, dass dies ohne Probleme geleistet werden kann.

Wenn die Empfangseinheit über den zweiten Datenbus an die Steuereinheit angeschlossen ist, kann ein von der Empfangseinheit auf das zweite Bussystem geschriebenes Datentelegramm den Gateway veranlassen, die Zählerstände der einzelnen Drehsensoren auf das zweite Bussystem zu schreiben. Das von der Empfangseinheit empfangene und dann auf das zweite Bussystem geschriebene Datentelegramm selbst ist in diesem Fall also ein Anforderungssignal für den Gateway. Eine andere Möglichkeit besteht daran, dass ein gesondertes Anforderungssignal erzeugt wird, durch dessen Erhalt der Gateway veranlasst wird, die Zählerstände der einzelnen Drehsensoren auf das zweite Bussystem zu schreiben. Ein solches Anforderungssignal wird ebenfalls über das zweite Bussystem übertragen und kann von der Steuereinheit oder der Empfangseinheit erzeugt werden.

Im einfachsten Fall überträgt der Gateway bei Erhalt eines Anforderungssignals die dann aktuellen Zählerstände der Drehsensoren von dem ersten Bussystem in das zweite Bussystem. Auch wenn die Empfangseinheit ein empfangenes Datentelegramm unverzüglich weiterleitet, kann es zu Verzögerungen kommen, so dass in einem solchen Fall die vom Gateway in das zweite Bussystem geschriebenen Zählerstände nicht für den Zeitpunkt gültig sind, zu dem in dem Datentelegramm Informationen über die Raddrehung vorliegen, die aus Messungen von einem oder mehreren Beschleunigungssensoren der Reifendrucküberwachungseinheit gewonnen wurden. Eine zwischenzeitlich erfolgte Änderung der Drehzahl des betroffenen Rades kann in solchen Fällen die Auswertung beeinträchtigen und eine eindeutige Zuordnung der Reifendrucküberwachungseinheiten zu den einzelnen Radpositionen erschweren und verzögern.

Eine vorteilhafte Weiterbildung der Erfindung sieht deshalb vor, dass das Anforderungssignal eine Zeitinformation enthält, die angibt, für welchen Zeitpunkt die Zählerstände der Drehsensoren benötigt werden. Insbesondere bei einer solchen Weiterbildung der Erfindung ist es vorteilhaft, wenn der Gateway einen Speicher aufweist, in dem Zählerstände der Drehsensoren gespeichert werden, z.B. die jeweils vier letzten Zählerstände für jeden Drehsensor. Die Zählerstände können in einem solchen Speicher jeweils rollierend überschrieben werden, so dass der Speicherbedarf relativ überschaubar ist.

Eine weitere vorteilhafte Weiterbildung der Erfindung sieht vor, dass die von dem Gateway auf das zweite Bussystem geschriebenen Zählerstände interpolierte Zählerstände sind. Da Zählerstände der einzelnen Drehsensoren nur in vorgegebenen Zeitintervallen von z.B. 10 ms abgefragt und dem Gateway über das erste Bussystem zur Verfügung gestellt werden, lässt sich die Datenqualität und damit die Zuordnung der Reifendrucküberwachungseinheiten zu den einzelnen Radpositionen verbessern, indem der Gateway für den gewünschten Zeitpunkt einen interpolierten Zählerstand ermittelt und diesen dann auf das zweite Bussystem schreibt. Wenn beispielsweise dem Gateway Zählerstände für einen Zeitpunkt t0 vorliegen und dann ein Abfragesignal Zählerstände für einen Zeitpunkt t0+x anfordert, kann der Gateway aus dem Zählerstand t0 und dem darauffolgenden Zählerstand t1>t0+x einen interpolierten Zählerstand für den Zeitpunkt t0+x berechnen. Die interpolierten Zählerstande können dabei im einfachsten Fall durch eine lineare Interpolation berechnet werden.

Weitere Einzelheiten und Vorteile der Erfindung werden an Ausführungsbeispielen unter Bezugnahme auf die beigefügten Zeichnungen erläutert. Gleiche und einander entsprechende Komponenten sind darin mit übereinstimmenden Bezugszeichen verzeichnet. Es zeigen:
- Fig. 1: eine schematische Darstellung eines Fahrzeugs mit zwei Bussystemen; und
- Fig. 2: eine schematische Darstellung eines Fahrzeugs mit drei Bussystemen.

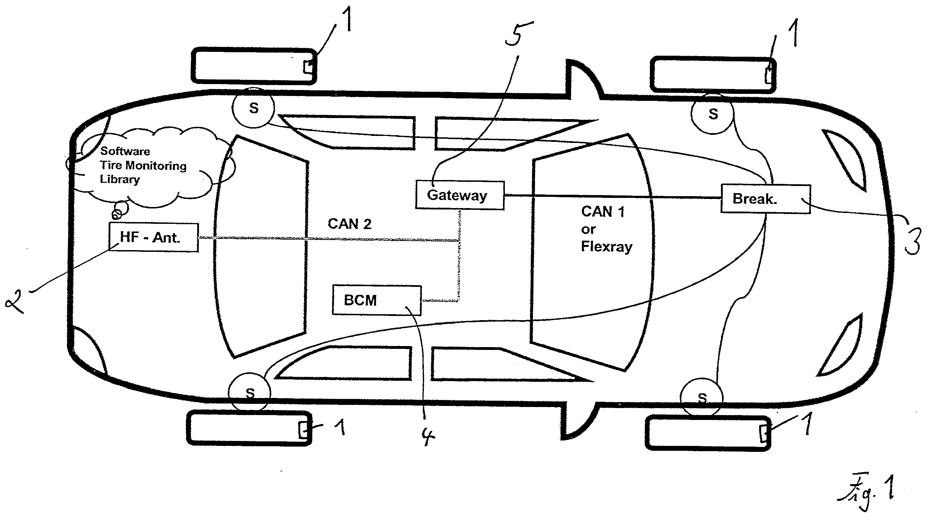

Das in Figur 1 schematisch dargestellte Fahrzeug ist mit einem System zur Überwachung des Reifendrucks ausgerüstet. Dazu ist an jedem der Räder des Fahrzeugs eine Reifendrucküberwachungseinheit 1 montiert. Jede dieser Reifendrucküberwachungseinheiten 1 enthält einen Drucksensor zum Messen des Reifendrucks, einen oder mehrere Beschleunigungssensoren sowie einen Temperatursensor und gegebenenfalls andere Sensoren. Die Reifendrucküberwachungseinheiten 1 enthalten zusätzlich einen Sender zum drahtlosen Übertragen von Datentelegrammen, die durch Messungen mit den verschiedenen Sensoren der Reifendrucküberwachungseinheit 1 gewonnene Daten, insbesondere Reifendruck- und Beschleunigungsdaten, sowie eine charakteristische Kennung enthalten. Jede der Reifendrucküberwachungseinheiten 1 hat eine eigene charakteristische Kennung, durch die sie eindeutig von anderen Reifendrucküberwachungseinheiten unterschieden werden kann.

Von den Reifendrucküberwachungseinheiten 1 ausgesandte Datentelegramme werden mit einer Empfangseinheit 2 empfangen, die in der Regel eine HF-Antenne aufweist, etwa zum Empfang von Signalen im Bereich von 433 MHz.

Eine Steuereinheit des Fahrzeugs wertet den Inhalt der Datentelegramme aus und ordnet die charakteristischen Kennungen und somit die einzelnen Reifendrucküberwachungseinheiten 1 den verschiedenen Radpositionen des Fahrzeugs zu. Zu diesem Zweck werden neben Daten der Beschleunigungssensoren in den Datentelegrammen auch Daten von Drehsensoren S, die jeweils einem der Räder zugeordnet sind, ausgewertet. Die Drehsensoren sind dafür eingerichtet, bei einer Drehung des ihnen zugeordneten Rades um einen vorgegebenen Drehwinkel ein Signal zu erzeugen, das einen in dem Drehsensor S zugeordneten Zählerstand inkrementiert.

Beispielsweise kann der Drehsensor S ein Zahnrad aufweisen, das drehfest an das betreffende Rad gekoppelt ist und sich somit zusammen mit dem Rad dreht. Jedes Mal wenn eine Flanke eines Zahns dieses Zahnrads eine vorgegebene Position passiert, kann dies beispielsweise mit einer Lichtschranke erfasst und so ein Signal erzeugt werden, das einen dem Drehsensor zugeordneten Zählerstand inkrementiert. Bei einem Zahnrad mit 48 Zähnen werden also bei einer vollen Radumdrehung 96 Signale erzeugt. Die den Drehsensoren zugeordneten Zähler können beispielsweise 16 Bit umfassen und bei einem Überlauf des Zählers wieder von neuem zu zählen beginnen.

Die Drehsensoren S können beispielsweise Teil eines ABS Systems sein und an eine Bremssteuereinheit 3 angeschlossen sein, die für jeden der einzelnen Drehsensoren S einen Zähler enthält, dessen Zählerstand jeweils bei Erhalt eines Signals von einem der Drehsensoren S in der beschriebenen Weise inkrementiert wird.

Anhand der Zählerstände der einzelnen Drehsensoren S kann somit die Drehzahl eines Rades ermittelt werden, nämlich um welchen Winkel sich das betreffende Rad zwischen zwei Abfragen des Zählerstandes weiter gedreht hat. Die Drehzahl eines Rades kann unabhängig davon auch aus Daten ermittelt werden, die mittels Messungen von einem oder mehreren Beschleunigungssensoren einer Reifendrucküberwachungseinheit 1 gewonnen wurden. Da die Drehzahlen der verschiedenen Räder eines Fahrzeugs nicht exakt übereinstimmen, kann somit durch Auswertungen der Datentelegramme und der Zählerstände eine Zuordnung der einzelnen Reifendrucküberwachungseinrichtungen 1 zu den jeweiligen Radpositionen des Fahrzeugs vorgenommen werden. Einzelheiten hierzu sind beispielsweise in der EP 0 806 306 B1 oder DE 10 2012 101 689 A1 beschrieben, auf die diesbezüglich verwiesen wird.

Um eine solche Zuordnung vornehmen zu können, muss eine Steuereinheit sowohl Daten der Zählerstände der Drehsensoren S als auch die von der Empfangseinheit 2 empfangenen Datentelegramme erhalten. Bei dem dargestellten Ausführungsbeispiel werden die Zählerstände der einzelnen Drehsensoren S von einer Bremssteuereinheit 3 in vorgegebenen Zeitabständen auf ein erstes Bussystem geschrieben, beispielsweise in Zeitabständen von 10 Millisekunden (ms). Bei diesem ersten Bussystem kann es sich beispielsweise um einen CAN Bussystem oder ein Flexray-Bussystem handeln. Die von der Empfangseinheit 2 empfangenen Datentelegramme werden auf ein zweites Bussystem geschrieben, beispielsweise ein CAN Bussystem. Die Auswertung der Datentelegramme erfolgt über eine Steuereinheit 4, beispielsweise ein Body-Control-Module BCM, das an das zweite Bussystem angeschlossen ist.

Das erste Bussystem und das zweite Bussystem sind über einen Gateway 5 miteinander verbunden. Der Gateway 5 ist dafür eingerichtet, bei Empfang eines Anforderungssignals einen Zählerstand der einzelnen Drehsensoren S aus dem ersten Bussystem in das zweite Bussystem zu schreiben. Das Anforderungssignal kann beispielsweise in einem von der Empfangseinheit 2 auf das zweite Bussystem gegebenen Datentelegramm bestehen oder ein separates Anforderungssignal sein, dass von der Steuereinheit 4 erzeugt wird.

Durch das Anforderungssignal kann dem Gateway 5 auch mitgeteilt werden, für welchen Zeitpunkt Zählerstände der Drehsensoren S aus dem zweiten Bussystem benötigt werden. Der Zeitpunkt kann durch den Empfang des Anforderungssignals, beispielsweise des Datentelegramms, definiert sein oder durch eine in dem Anforderungssignal explizit enthaltene Zeitinformation. Der Gateway kann dabei aus den ihm über das erste Bussystem zur Verfügung gestellten Zählerständen für jeden Drehsensor S einen interpolierten Zählerstand für den durch das Anforderungssignal bestimmten Zeitpunkt ermitteln und auf das zweite Bussystem schreiben, wo diese Information dann von der Steuereinheit 4 gelesen und ausgewertet werden kann.

Da an das zweite Bussystem in der Regel mehrere Steuereinheiten angeschlossen sind, kann grundsätzlich jede dieser Steuereinheiten verwendet werden, um Datentelegramme und interpolierte Zählerstände auszuwerten. Geeignete Software kann grundsätzlich in jedem Steuergerät, das ausreichend freie Kapazitäten zur Auswertung der Datentelegramme und der Zählerstände hat, installiert werden. Prinzipiell ist es dabei sogar möglich, die beschriebene Auswertung von mehreren Steuereinheiten durchführen zu lassen, die jeweils einen Teil der zur Auswertung erforderlichen Schritte vornehmen und entsprechende Softwarekomponenten ausführen.

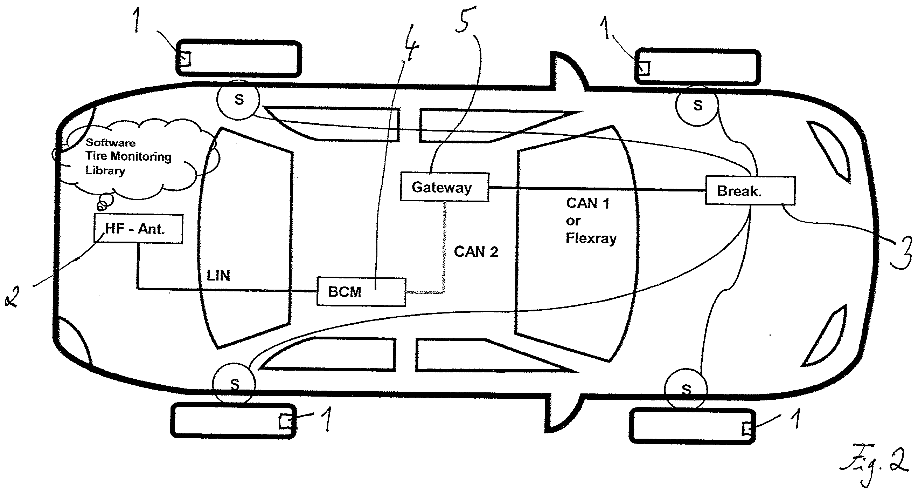

Figur 2 zeigt ein weiteres Ausführungsbeispiel eines Fahrzeugs mit einem Reifendrucküberwachungssystem 1 Der wesentliche Unterschied zu dem vorstehend beschriebenen Ausführungsbeispiel besteht darin, dass die Empfangseinheit 2 nicht direkt an das zweite Bussystem angeschlossen ist. Die Empfangseinheit ist stattdessen über ein drittes Bussystem an die Steuereinheit angeschlossen, beispielweise ein LIN Bussystem. Die Bremssteuereinheit, welche die Zählerstände für die einzelnen Drehsensoren S erfasst, ist wie bei dem ersten Ausführungsbeispiel über ein erstes Bussystem an den Gateway 5 angeschlossen und die Steuereinheit 4, welche die Auswertung der Datentelegramme und der Zählerstände durchführt, über ein zweites Bussystem an den Gateway 5 angeschlossen.

### Bezugszeichenliste

- 1: Reifendrucküberwachungseinheit
- 2: Empfangseinheit
- 3: Bremssteuereinheit
- 4: Steuereinheit
- 5: Gateway

- S: Drehsensor

## Patentansprüche

1. System zur Überwachung des Reifendrucks von Rädern eines Fahrzeugs, mit Reifendrücküberwachungseinheiten (1), die an Rädern des Fahrzeugs montiert sind, wobei jede der Reifendrucküberwachungseinheiten (1) einen Drucksensor zum Messen des Reifendrucks, einen Beschleunigungssensor und einen Sender zum drahtlosen Übertragen von Datentelegrammen aufweist und die Datentelegramme von dem Drucksensor und dem Beschleunigungssensor gewonnene Daten sowie eine charakteristische Kennung der Reifendrucküberwachungseinheit (1) enthalten,
einer Empfangseinheit (2), die dafür eingerichtet ist, von den Reifendrucküberwachungseinheiten (1) ausgesandte Datentelegramme zu empfangen,
Drehsensoren (S), die jeweils einem der Räder zugeordnet sind und dafür eingerichtet sind, bei einer Drehung des ihnen jeweils zugeordneten Rades um einen vorgegeben Drehwinkel ein Signal zu erzeugen, das einen dem Drehsensor (S) zugeordneten Zählerstand inkrementiert, und
einer Steuereinheit (4), die dafür eingerichtet ist, durch Auswerten von in den Datentelegrammen enthaltenen Daten und von den Drehsensoren gelieferten Daten die einzelnen Reifendrucküberwachungseinheiten (1) jeweils einer Radposition des Fahrzeugs zuzuordnen,
**gekennzeichnet durch**
ein erstes Bussystem, das an die Drehsensoren (S) angeschlossen ist,
ein zweites Bussystem, das an die Steuereinheit (4) angeschlossen ist, und einen Gateway (5), um Daten zwischen dem ersten und dem zweiten Bussystem zu transferieren,
wobei der Gateway (5) dafür eingerichtet ist, bei Empfang eines von dem zweiten Bussystem übertragenen Anforderungssignals einen Zählerstand der einzelnen Drehsensoren (S) aus dem ersten Bussystem in das zweite Bussystem zu schreiben.

2. System nach Anspruch 1, **dadurch gekennzeichnet, dass** das Anforderungssignal von der Empfangseinheit (2) oder der Steuereinheit (4) erzeugt wird.

3. System nach einem der vorstehenden Ansprüche, **dadurch gekennzeichnet, dass** der Gateway (5) einen Zählerstand der einzelnen Drehsensoren (5) auf das zweite Bussystem schreibt, der für den Zeitpunkt des Empfangs des Anforderungssignals gilt.

4. System nach einem der vorstehenden Ansprüche, **dadurch gekennzeichnet, dass** das Anforderungssignal eine Zeitinformation enthält, die angibt, für welchen Zeitpunkt der Gateway (5) den Zählerstand der einzelnen Drehsensoren (S) auf das zweite Bussystem schreibt.

5. System nach einem der vorstehenden Ansprüche, **dadurch gekennzeichnet, dass** die von dem Gateway (5) auf das zweite Bussystem geschriebenen Zählerstände interpolierte Zählerstände sind.

6. System nach Anspruch 5, **dadurch gekennzeichnet, dass** der Gateway (5) dafür einrichtet ist, die interpolierten Zählerstände aus Zählerständen zu berechnen, die er über das erste Bussystem empfangen hat.

7. System nach einem der vorstehenden Ansprüche, **dadurch gekennzeichnet, dass** der Gateway (5) einen Speicher aufweist, in dem ein von dem ersten Bussystem gelesener Zäherstand der einzelnen Drehsensoren (5) zumindest bis zum Lesen des nächsten Zählerstands gespeichert wird.

8. System nach einem der vorstehenden Ansprüche, **dadurch gekennzeichnet, dass** das erste Bussystem ein CAN-Bussystem oder ein Flexray-Bussystem ist.

9. System nach einem der vorstehenden Ansprüche, **dadurch gekennzeichnet, dass** das zweite Bussystem ein CAN-Bussystem ist.

10. System nach einem der vorstehenden Ansprüche, **dadurch gekennzeichnet, dass** die Empfangseinheit (2) über das zweite Bussystem mit der Auswerteeinheit (4) verbunden ist.

11. System nach einem der vorstehenden Ansprüche, **dadurch gekennzeichnet, dass** die Empfangseinheit (2) über ein drittes Bussystem mit der Auswerteeinheit (4) verbunden ist.

12. System nach einem der vorstehenden Ansprüche, **dadurch gekennzeichnet, dass** das dritte Bussystem ein LIN-Bus ist.

13. System nach einem der vorstehenden Ansprüche, **dadurch gekennzeichnet, dass** die Drehsensoren (S) über eine Bremssteuereinheit (3) an das erste Bussystem angeschlossen sind.

## Claims

1. A system for monitoring the tire pressure of wheels of a vehicle, having tire pressure monitoring units (1) mounted on the wheels of the vehicle, each of the tire pressure monitoring units (1) comprising a pressure sensor for measuring the tire pressure, an acceleration sensor and a transmitter for wireless transmission of data telegrams, the data telegrams containing data obtained from the pressure sensor and the acceleration sensor and a characteristic identifier of the tire pressure monitoring unit (1),
a receiving unit (2) being set up to receive data telegrams sent by the tire pressure monitoring units (1),
rotation sensors (S) each being associated with one of the wheels and being set up to generate a signal when the wheel associated with them rotates by a predetermined angle of rotation, the signal incrementing a counter reading associated with the rotation sensor (S), and
a control unit (4) being set up to associate the individual tire pressure monitoring units (1) with a wheel position of the vehicle by evaluating data contained in the data telegrams and data supplied by the rotation sensors,
**characterized by**
a first bus system connected to the rotation sensors (S),
a second bus system connected to the control unit (4) and a gateway (5) to transfer data between the first and the second bus system,
the gateway (5) being set up to write a counter reading of the individual rotation sensors (S) from the first bus system into the second bus system upon receipt of a request signal transmitted by the second bus system.

2. The system according to claim 1, **characterized in that** the request signal is generated by the receiving unit (2) or the control unit (4).

3. The system according to any one of the preceding claims, **characterized in that** the gateway (5) writes a counter reading of the individual rotation sensors (5) to the second bus system, which counter reading is regarded as the point in time of receipt of the request signal.

4. The system according to any one of the preceding claims, **characterized in that** the request signal contains time information which indicates the point in time for which the gateway (5) writes the counter reading of the individual rotation sensors (S) to the second bus system.

5. The system according to any one of the preceding claims, **characterized in that** the counter readings written to the second bus system by the gateway (5) are interpolated counter readings.

6. The system according to claim 5, **characterized in that** the gateway (5) is set up to calculate the interpolated counter readings from counter readings which it has received via the first bus system.

7. The system according to any one of the preceding claims, **characterized in that** the gateway (5) comprises a memory in which a counter reading of the individual rotation sensors (5) read by the first bus system is stored at least until the next counter reading is read.

8. The system according to any one of the preceding claims, **characterized in that** the first bus system is a CAN bus system or a Flexray bus system.

9. The system according to any one of the preceding claims, **characterized in that** the second bus system is a CAN bus system.

10. The system according to any one of the preceding claims, **characterized in that** the receiving unit (2) is connected to the evaluation unit (4) via the second bus system.

11. The system according to any one of the preceding claims, **characterized in that** the receiving unit (2) is connected to the evaluation unit (4) via a third bus system.

12. The system according to any one of the preceding claims, **characterized in that** the third bus system is a LIN-bus system.

13. The system according to any one of the preceding claims, **characterized in that** the rotation sensors (S) are connected to the first bus system via a brake control unit (3).

## Revendications

1. Système de surveillance de la pression de pneumatiques des roues d'un véhicule, avec des unités de surveillance de pression de pneumatiques (1), qui sont montées sur des roues du véhicule, sachant que chacune des unités de surveillance de pression de pneumatiques (1) comporte un capteur de pression pour mesurer la pression de pneumatiques, un capteur d'accélération et un émetteur pour la transmission sans fil de télégrammes de données et les télégrammes de données contiennent des données acquises par le capteur de pression et le capteur d'accélération ainsi qu'une identification caractéristique de l'unité de surveillance de pression de pneumatiques (1),
une unité de réception (2) qui est agencée pour recevoir des télégrammes de données émis par les unités de surveillance de pression de pneumatiques (1),
des capteurs rotatifs (S) qui sont respectivement attribués à une des roues, et sont agencés à cet effet pour produire lors d'une rotation de la roue qui leur est respectivement attribuée autour d'un angle de rotation prédéfini, un signal, qui fait progresser un état de compteur attribué au capteur rotatif (S), et
une unité de commande (4), qui est agencée à cet effet pour attribuer respectivement les unités de surveillance de pression de pneumatiques (1) à une position de roue du véhicule par l'évaluation des données contenues dans les télégrammes de données et des données fournies par les capteurs rotatifs,
**caractérisé par**
un premier système de bus, qui est connecté aux capteurs rotatifs (S),
un deuxième système de bus, qui est connecté à l'unité de commande (4), et
une passerelle (5) pour transférer les données entre le premier et le deuxième système de bus,
sachant que la passerelle (5) est agencée pour transcrire un état de compteur des capteurs rotatifs individuels (S) du premier système de bus dans le deuxième système de bus lors de la réception d'un signal de demande transmis par le deuxième système de bus.

2. Système selon la revendication 1, **caractérisé en ce que** le signal de demande est produit par l'unité de réception (2) ou l'unité de commande (4).

3. Système selon l'une quelconque des revendications précédentes, **caractérisé en ce que** la passerelle (5) transcrit un état de compteur des capteurs rotatifs individuels (5) sur le deuxième système de bus, qui est valable pour le moment de la réception du signal de demande.

4. Système selon l'une quelconque des revendications précédentes, **caractérisé en ce que** le signal de demande contient une information de temps, qui indique pour quel moment la passerelle (5) transcrit l'état de compteur des capteurs rotatifs individuels (S) sur le deuxième système de bus.

5. Système selon l'une quelconque des revendications précédentes, **caractérisé en ce que** les états de compteur transcrits par la passerelle (5) sur le deuxième système de bus, sont des états de compteur interpolés.

6. Système selon la revendication 5, **caractérisé en ce que** la passerelle (5) est agencée pour calculer les états de compteur interpolés à partir des états de compteur, qu'elle a reçus par le biais du premier système de bus.

7. Système selon l'une quelconque des revendications précédentes, **caractérisé en ce que** la passerelle (5) comporte une mémoire, dans laquelle est mémorisé au moins jusqu'à la lecture de l'état de compteur suivant, un état de compteur des capteurs rotatifs individuels (5) lu par le premier système de bus.

8. Système selon l'une quelconque des revendications précédentes, **caractérisé en ce que** le premier système de bus est un système de bus CAN ou un système de bus Flexray.

9. Système selon l'une quelconque des revendications précédentes, **caractérisé en ce que** le deuxième système de bus est un système de bus CAN.

10. Système selon l'une quelconque des revendications précédentes, **caractérisé en ce que** l'unité de réception (2) est reliée à l'unité d'évaluation (4) par le deuxième système de bus.

11. Système selon l'une quelconque des revendications précédentes, **caractérisé en ce que** l'unité de réception (2) est reliée à l'unité d'évaluation (4) par un troisième système de bus.

12. Système selon l'une quelconque des revendications précédentes, **caractérisé en ce que** le troisième système de bus est un bus LIN.

13. Système selon l'une quelconque des revendications précédentes, **caractérisé en ce que** les capteurs rotatifs (S) sont connectés au premier système de bus par une unité de commande de frein (3).
